# EUROPEAN PATENT SPECIFICATION

(11) **EP 4 204 684 B1**
(45) Date of publication and mention of the grant of the patent: **24.07.2024**
(21) Application number: 21798373.3
(22) Date of filing: 21.10.2021
(51) Int. Cl.: F03D 80/00, F03D 80/50

(54) **NACELLE FOR A WIND TURBINE**
GONDEL FÜR EINE WINDTURBINE
NACELLE DESTINÉE À UNE ÉOLIENNE

(30) Priority: 29.10.2020 DK PA202070716
(43) Date of publication of application: 05.07.2023
(73) Proprietor: Jupiter Bach A/S, 4600 Køge (DK)
(72) Inventor: RAIMUND, Ulrik, 4793 Bogø By (DK)
(74) Representative: Page White Farrer
(86) International application number: PCT/EP2021/079280
(87) International publication number: WO 2022/090061

(56) References cited:
- EP-A1- 2 469 007
- EP-A1- 2 855 924
- EP-A1- 3 246 561
- KR-B1- 101 638 012

## Description

The present invention relates to a nacelle for a wind turbine.

A wind turbine converts the kinetic energy in the wind into mechanical power by means of a rotor coupled to main machinery components. Wind turbines comes in various sizes ranging from small wind turbines to very large turbines, the majority of which are large three-bladed horizontal-axis wind turbines (HAWT). The large wind turbines are high and have a very large numbers of main machinery component groups and subcomponents installed on a frame inside the nacelle cover. Wind turbines from different manufacturers have different frames and arrangements of machinery to fit inside the various designs of nacelle cover, which designs have an impact on the arrangement of the machinery as well.

The nacelle cover has a roof. It is necessary to be able to lift machinery components into and out of the nacelle, during installation and/or service of the wind turbine. Accordingly, it is known to provide the roof with an openable structure to enable access into the interior space of the nacelle. For example, EP-A-2855924 discloses that a roof is displaced rearwards so as to be cantilevered over a rear edge of the nacelle. EP-A-3246561 discloses a movable cover which can be lifted vertically above a fixed cover to form an expanded space below the lifted movable cover. It is known to provide various openable hatch constructions in a nacelle roof, for example as disclosed in WO-A-2018/054437 which discloses a hinged, foldable hatch, and EP-A-2375066 which discloses a hinged hatch.

EP-A-2469007 discloses a nacelle for a wind turbine having the features of the precharacterising portion of claim 1.

Despite the wide variety of known nacelle roof structures, there is a need for a versatile roof structure of the nacelle housing which can enable enhanced access to the interior space of the nacelle, for example during the installation of the wind turbine or after installation during service which requires machinery components to be installed into or removed from the interior space via an opening in the roof structure.

The present invention aims to provide a nacelle for a wind turbine which meets that need.

Accordingly, the present invention provides a nacelle for a wind turbine, wherein the nacelle comprises a nacelle cover formed by an elongate housing defining an interior space for containing machinery components of the wind turbine, the housing comprising opposite sidewalls, a floor and a roof, the housing having a front end for mounting to a tower of the wind turbine, and an opposite rear end. The roof comprises an assembly of first and second hatches which are adjacent to each other and arranged in series in a longitudinal direction extending between the front and rear ends along the housing, each of the first and second hatches comprising a respective longitudinally-extending sliding mechanism whereby the respective hatch is slidable in the longitudinal direction. The nacelle further comprises a lifting mechanism which is configured to lift the first hatch from a closed position, at which the first hatch is fitted to the housing and at least partly closes a roof opening therein, to a partly-open raised position at which the first hatch is higher than the adjacent second hatch, and wherein the sliding mechanism of the lifted first hatch is slidably engageable with the sliding mechanism of the adjacent second hatch whereby the first hatch is slidable from the partly-open raised position into a stacked configuration above the adjacent second hatch to form a stack of the first and second hatches.

In a preferred embodiment of the present invention, the sliding mechanism of the first hatch comprises a first slidable component and the sliding mechanism of the second hatch comprises a second slidable component, wherein the first and second components are configured to engage in a slidable relationship.

Preferably, the first slidable component is affixed to a lower surface of the first hatch and the second slidable component is affixed to an upper surface of the second hatch.

Preferably, the first slidable component comprises a pair of first slide elements respectively located along opposite longitudinal edges of the first hatch and the second slidable component comprises a pair of second slide elements respectively located along opposite longitudinal edges of the second hatch, wherein the opposite longitudinal edges of the first and second hatches are slidably attachable by a respective pair of the first and second slide elements.

In one embodiment of the present invention, the first slide element comprises a plurality of rollers and the second slide element comprises an elongate longitudinal channel configured to receive the plurality of rollers. In another embodiment of the present invention, the first slide element comprises a plurality of rollers and a longitudinal flange and the second slide element comprises a longitudinal guide surface over which the plurality of rollers are configured to roll in a longitudinal direction and an elongate longitudinal channel configured to receive the longitudinal flange.

In a preferred embodiment of the present invention, the lifting mechanism comprises a second slidable component. The second slidable component comprises a further pair of the second slide elements which are respectively located beneath opposite longitudinal edges of the assembly of first and second hatches, the further pair of the second slide elements being positionable to engage the respective pair of the first slide elements on the first hatch. The lifting mechanism comprises a first drive device for raising or lowering the further pair of the second slide elements, and a second drive device for moving the further pair of the second slide elements longitudinally along the roof.

Preferably, the second drive device comprises an elongate gantry extending longitudinally along the housing.

In a preferred embodiment of the present invention, the lifting mechanism is configured to raise the further pair of second slide elements from a first position to a second position, wherein in the first position the first hatch is in the closed position and the pair of first slide elements on the first hatch are engaged with the further pair of second slide elements, and in the second position the first hatch is in the partly-open raised position and the further pair of the second slide elements are aligned with the pair of second slide elements on the second hatch whereby the pair of first slide elements on the first hatch can be slid longitudinally out of engagement with the further pair of second slide elements and into engagement with the pair of the second slide elements on the second hatch to form the stack of the first and second hatches.

In a preferred embodiment of the present invention, the sliding mechanism of the second hatch further comprises a first slidable component which comprises a pair of the first slide elements of the second hatch which are configured to engage in a slidable relationship with the further pair of second slide elements of the lifting mechanism.

Preferably, when the pair of the first slide elements of the second hatch are slidably engaged with the further pair of second slide elements of the lifting mechanism, the second drive device can move the stack of the first and second hatches longitudinally along the housing.

In a preferred embodiment of the present invention, the lifting mechanism is configured to lift the second hatch, when the first hatch is in the stacked configuration above the second hatch, from a closed position, at which the second hatch is fitted to the housing and at least partly closes a roof opening therein, to a partly-open raised position at which the second hatch is higher than an adjacent third hatch which comprises a respective longitudinally-extending sliding mechanism whereby the third hatch is slidable in the longitudinal direction, and wherein the sliding mechanism of the second hatch is slidably engageable with the sliding mechanism of the adjacent third hatch whereby when the second hatch is in the partly-open raised position the second hatch is slidable into a stacked configuration above the adjacent third hatch to form a stack of the first, second and third hatches.

Preferably, the lifting mechanism is configured to move the further pair of second slide elements from the second position to a third position, wherein in the third position the second hatch has the first hatch in a stacked configuration thereabove, and the second hatch is in the closed position and the pair of first slide elements on the second hatch are engaged with the further pair of second slide elements of the lifting mechanism.

Preferably, the sliding mechanism of the third hatch comprises a first slidable component which comprises a respective pair of the first slide elements and a second slidable component which comprises a respective pair of the second slide elements, and the lifting mechanism is configured to move the further pair of second slide elements from the third position to a fourth position, wherein in the fourth position the second hatch is in a partly-open raised position and the further pair of second slide elements are aligned with the pair of second slide elements on the third hatch whereby the pair of first slide elements on the second hatch can be slid longitudinally out of engagement with the further pair of second slide elements and into engagement with the pair of the second slide elements on the third hatch to form the stack of the first, second and third hatches.

Preferably, the lifting mechanism is configured to move the further pair of second slide elements from the fourth position to a fifth position, wherein in the fifth position the first, second and third hatches form the stack thereof, the third hatch is in the closed position and the pair of first slide elements on the third hatch are engaged with the further pair of second slide elements of the lifting mechanism, and wherein the second drive device can move the stack of the first, second and third hatches longitudinally along the housing from the fifth position.

Preferably, the roof further comprises a locking mechanism for releasably locking together vertically adjacent hatches in a stacked configuration.

In a preferred embodiment of the present invention, in a closed position at least one of the first and second hatches is removably affixed to the housing by a threaded bolt and nut assembly comprising a nut having an outer first helical thread which is threadably screwed into a wall of the hatch, and a bolt which extends through a wall of the housing and the wall of the hatch and is threadably screwed into an inner second helical thread of the nut.

Preferably, the nut comprises a head part, an integral shaft part adjacent to the head part, and a cylindrical blind bore which extends longitudinally along the shaft part and has an open end at a free end of the shaft part and a closed end within the nut, wherein the shaft part has an external surface of rotation with the first helical thread and the blind cylindrical blind bore has an internal cylindrical surface with the second helical thread, wherein the first and second helical threads have opposite rotational directions. Typically, the external surface of rotation) of the shaft part is frustoconically tapered and reduces in radius in a direction towards the free end.

Within the scope of the present invention the term "nacelle cover" is understood to mean the part of the wind turbine that houses the main machinery, and to which the rotor is mounted at a front end. Typically the composite nacelle cover has a bottom hole that is aligned with a hole in a bed plate at the top of the tower. The hole in the bed plate is correspondingly aligned with a hole at the top of the tower, which typically is centrally located (plus a tolerance) with respect to the external dimensions of the top of the tower.

The composite nacelle cover can be a fibre-reinforced polymer composite nacelle cover, preferably a fiber-reinforced composite nacelle cover having opposite fibre-reinforced polymer face skins laminating a foam core, i.e. a sandwich construction as is well known in the art of composite materials. The fibre-reinforced composite may comprise glass fibre, carbon fibre, natural fibre or any other suitable fibre; the polymer resin to form the matrix may comprise a thermoplastic or thermosetting resin, for example an epoxy resin or a vinylester resin. Any suitable fibre-reinforced resin matrix polymer composite material known for use in manufacturing wind turbines may be used.

In a typical embodiment of the present invention, the main machinery components within the nacelle housing, for example secured to the nacelle housing which acts as a first load-carrying structure, may be one or more of the transformer, cooling system and/or the electrical control cabinet(s). Additional components, such as a crane for lifting machinery components into or out of the nacelle housing, may be secured to the nacelle housing.

The main machinery components to be supported by the composite housing can be lifted separately and quickly into the nacelle cavity as individual main machinery component(s), which process of course is less heavy and complicated than when lifting the combined installation of all main machinery components pre-mounted on a single enlarged load-carrying frame. Once inside the nacelle cover, each component of the main machinery components can subsequently be secured to the wall of the nacelle cover. The main machinery components of the wind turbine that are fitted to at least a part of the load-carrying frame can be lifted in conventional manner inside the composite nacelle cover, but this assembled structure is still much less heavy and easier to lift than if a fully equipped load-carrying frame is lifted.

In conventional wind turbines all parts of main machinery components are lifted in common on a load-carrying frame, which put a high demand on the ways the parts must be secured to the load-carrying frame in order not to displace to any extent at all in relation to each other, or drop off the load-carrying frame during lifting. When fewer parts of main machinery need to be lifted in common the lifting process is less vulnerable to failure and wind influences. A separate component of the first part of main machinery components only needs to be secured to the load-carrying nacelle cover wall at few points.

The invention also provides freedom to install individual components on other positions inside the nacelle cover than previously defined and dictated by the conventional load-carrying frame composed of both a bed plate frame and a main frame. Thus the interior positioning arrangement of main machinery components, and the design of said arrangement, can, provided that the mechanical interaction of main machinery components allow it and is not affected or destroyed, be customized and targeted for each customer and each nacelle design, and easily changed if the demand and possibility arises.

A 3-Dimensional structure of a nacelle cover, preferably composed of composite material, which is especially useful for carrying the load of the machinery components may have substantially flat and straight walls, thus walls without any substantially curving. Optionally such a nacelle cover may have a substantially rectangular appearance with a substantially square cross-section.

The present invention also relates to a wind turbine comprising a tower and a nacelle at the top of the tower. The wind turbine comprises the composite nacelle cover described above and being equipped with main machinery component(s), optionally secured to the wall of the nacelle cover, preferably composed of composite material, without using a load-carrying frame, thereby substantially reducing overall weight of the nacelle and making the installation of the main machinery components fast and easy. The nacelle cover may be secured directly to the top of the tower.

The invention will now be described by way of example only with references to the accompanying drawings, in which
Figure 1 is a schematic perspective side view from above of a nacelle cover for a wind turbine in accordance with an embodiment of the present invention, with the roof in a fully closed configuration;
Figure 2 is a schematic side view of the nacelle cover of Figure 1, with the roof in a first open configuration;
Figure 3 is a schematic plan view from above of the nacelle cover of Figure 2, with the roof in a second open configuration;
Figure 4 is a schematic plan view from above of the nacelle cover of Figure 2, with the roof in a third open configuration;
Figure 5 is a schematic plan view from above of the nacelle cover of Figure 2, with the roof in a fourth open configuration;
Figure 6 is an enlarged schematic end view along line A-A illustrating in greater detail the roof hatches of the roof of the nacelle cover shown in Figure 1;
Figures 7 to 11 are schematic side views of the roof hatches of the roof of the nacelle cover shown in Figure 1 showing a series of steps in a sequence of progressively opening the roof of the nacelle cover of Figure 1;
Figures 12 to 14 are schematic perspective side views from above of two roof hatches of a roof of a nacelle cover in accordance with a further embodiment of the present invention showing a series of steps in a sequence of progressively opening the roof of the nacelle cover;
Figure 15 is a schematic perspective side view from below of a nut for a threaded bolt and nut assembly for removably affixing the roof hatches of any of the embodiments of Figures 1 to 14 to the housing; and
Figure 16 is a schematic side view of a threaded bolt and nut assembly comprising the nut of

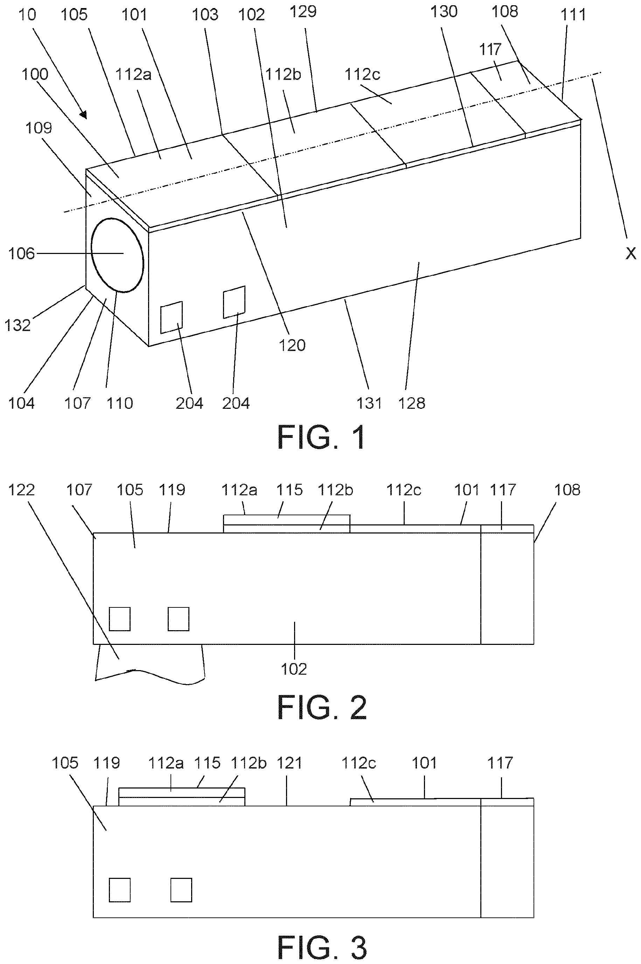

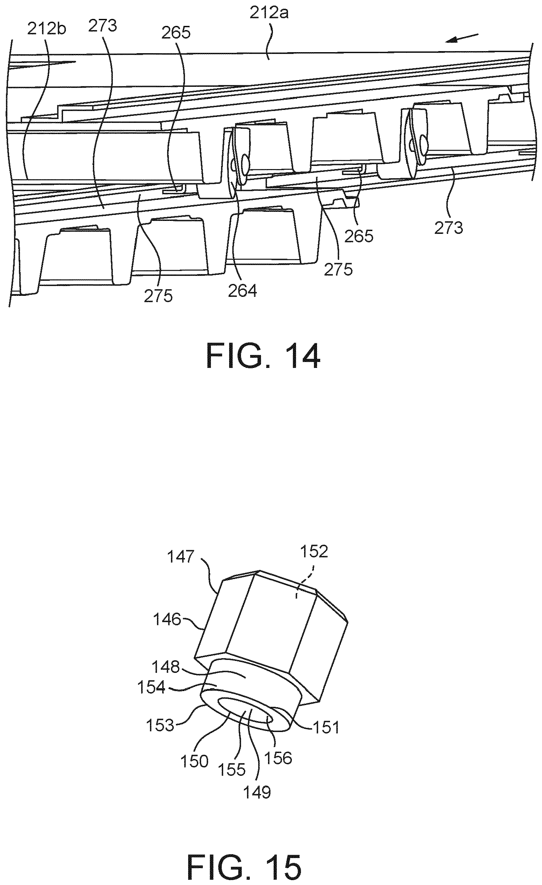

Figure 15 removably affixing a roof hatch of any of the embodiments of Figures 1 to 14 to the housing.

Referring to Figure 1, there is schematically illustrated a nacelle 10 for a wind turbine having a nacelle cover 100 in accordance with an embodiment of the present invention. In the accompanying Figures 1 to 11, the dimensions of the various structural features are not to scale and may be illustrated in an exaggerated form for clarity of illustration. Also, for clarity of illustration the machinery components and any internal frame within the nacelle cover of the wind turbine are not illustrated.

The nacelle cover 100 comprises a roof 101, opposite sidewalls 102, 103 and a floor 104 assembled together to form an elongate housing 105 defining an interior space 106. The interior space 106 in use contains machinery components of the wind turbine. For example, in a typical wind turbine, the hub (not shown) is secured to a front end 107 of the nacelle cover 100 with the blades directly bolted to the hub, or bolted to the hub via a pitch bearing. In the embodiment of the present invention, the yaw system, mainshaft bearing, gearbox, generator, transformer and electrical control cabinets are behind the hub and mounted within the nacelle cover 100.

The front end 107 of the housing 105 is mounted to a tower 122, shown in Figure 2, of the wind turbine (not shown), and an opposite rear end 108 extends laterally away from the tower. A front end wall 109, preferably flat, is illustrated as being vertical but may be upwardly inclined and has a front hole 110 for securing the rotor (not shown) of the wind turbine. A rear end wall 111 closes the rear end 108. In the illustrated embodiment the rear end wall 111 is vertical, but may have any other desired shape and configuration.

The roof 101 is provided with a plurality of hatches 112a, 112b, 112c which can be moved temporarily during or after installation of the wind turbine when it is required to install, remove or replace any of the machinery components mounted within the nacelle cover 100. It is conventional to use a crane to access the interior space 106 via the roof 101 after opening the roof 101. In the illustrated embodiment, the roof 101 is also provided with a fixed panel 113, which is fitted at the rear end 108 of the housing 105. In alternative embodiments, no fixed panel is provided, or the fixed panel is provided at a different position along the roof 101, or a plurality of fixed panels may be provide at spaced locations.

The floor 104 has a bottom hole (not shown) for securing the nacelle cover 100 in accessible communication with the tower of the wind turbine to provide access to the interior space 106 of the nacelle cover 100 from the tower.

Each of the roof 101, the opposite sidewalls 102, 103 and the floor 104 comprise a fibre-reinforced polymer composite material. Preferably, each of the front end wall 109 and the rear end wall 111 also comprise a fibre-reinforced polymer composite material.

However, in an alternative embodiment one or more of the roof 101, the opposite sidewalls 102, 103, the floor 104, the front end wall 109 and the rear end wall 111 may be composed of metal.

In the preferred embodiment, the nacelle cover 100 is self-supporting and furthermore has one or more machinery components fitted directly or indirectly to the opposite sidewalls 102, 103, and not to any metal frame fitted directly or indirectly to the tower, so that the sidewalls 102, 103 support the machinery component(s) within the nacelle 10.

Each of the opposite sidewalls 102, 103 and the floor 104 comprise a respective wall element comprising an assembly of a plurality of panels which have been joined together to form a respective elongate row of panels. Each hatch 112a, 112b, 112c and fixed panel 113 of the roof 101 may comprise a single panel or an assembly of a plurality of panels which have been joined together to form a respective elongate row of panels. Preferably, each of the front end wall 109 and the rear end wall 111 also comprise an assembly of a plurality of panels comprised of a fibre-reinforced polymer composite material. Each panel comprises fibre-reinforced polymer composite material, and typically comprises a planar wall part reinforced by structural beams affixed to or integral with the planar wall part. For clarity of illustration, the individual panels are not illustrated.

In one embodiment, the composite nacelle cover 100 may have a panel structure as disclosed in the Applicant's WO-A-2019/034214 in which each wall element comprises an assembly of plural sandwich panels comprising opposite skins of fibre-reinforced polymer composite material laminated to a foam core.

In the illustrated embodiment, the opposite sidewalls 102, 103 are flat, but may be three-dimensionally shaped. The roof 101 may be flat or upwardly bowed about a radius of curvature within the range of from 0 to 16 m. An upwardly bowed surface assists run-off of rain and sliding of snow from the roof 101 to minimise excess snow loads on the nacelle cover 100 during winter weather conditions. The roof 101 may also have an upwardly domed shape at the front end 107 so that the outer surface of the roof 101 is aligned with hub. The floor 104 is flat, or alternatively downwardly bowed about a radius of curvature within the range of from 0 to 16m.

The front end 107 of the housing 105 is mounted on a bed plate frame (not shown) which is affixed to the tower 122 as is conventional to those skilled in the art of wind turbine manufacture and construction. The front end 107 is fitted to the bed plate frame by at least one fitting assembly 204. In the illustrated embodiment, there are four fitting assemblies 204, comprised of two fitting assemblies 204 longitudinally spaced along each respective sidewall 102, 103. The bed plate frame supports at least one part of a drive train of the wind turbine. Optionally, a main frame is fixed to the bed plate frame and extends in a longitudinal direction along the housing 105 towards the rear end 108. The main frame, when present, also supports at least one part of the drive train of the wind turbine.

For some wind turbines, the various machinery components are pre-assembled on the ground prior to the pre-assembly being installed within the nacelle cover after the nacelle cover has been fitted to the top of the tower. However, on some bigger wind turbines, the individual drivetrain components, for example the mainshaft, and gearbox, may often be individually installed into the nacelle cover after the nacelle cover is lifted to the top of the tower, since the final assembly may be too heavy to be carried by the crane.

The roof 101, opposite sidewalls 102, 103 and floor 104 are assembled at each longitudinally-extending corner 129, 130, 131, 132 of the housing 105 by at least one respective fixing mechanism (not shown) to form a structural joint at least partially along the respective longitudinally-extending corner 129, 130, 131, 132. The roof 101, opposite sidewalls 102, 103 and floor 104 thereby form a structural tube 128.

In a particularly preferred embodiment, the structural tube 128 is configured to resist a vertical load of at least 500kN, and a vertical bending moment of at least 3500kNm, applied to the housing 105 at a position laterally of the mounting between the front end 107 of the housing 105 and the bed plate frame which is affixed to the tower.

The structural tube 128 is preferably configured to resist a horizontal lateral load of at least 100kN, and a horizontal bending moment of at least 1200kNm, applied to the housing at a position laterally of the mounting between the front end 107 of the housing 105 and the bed plate frame which is affixed to the tower.

Typically, the sidewalls 102, 103, and optionally each of the roof 101 and the floor 104, have an in-plane shear strength of from 25 to 40 N/mm² and an in-plane compression strength of from 200 to 250 N/mm². Furthermore, preferably the sidewalls 102, 103, and optionally each of the roof 101 and the floor 104, have a shear load strength of greater than 5 kN and a bending moment strength of greater than 6 kNm.

In the present invention, the roof 101 is provided with a large opening covered by an assembly of first, second and third movable hatches 112a, 112b, 112c which can be temporarily opened to access the interior space 106. When such large openings are provided, the floor 102, opposite to the roof 101, is preferably reinforced. Furthermore, when the hatches 112a, 112b, 112c are in a closed position, the hatches may enhance the strength and stiffness of the housing 105; in particular, the closed hatches may provide an increased snow load capability of the roof 101 of the housing 105.

In the illustrated embodiment there are three hatches 112a, 112b, 112c. The first hatch 112a is located at the front end 107, the adjacent second hatch 112b is located in the middle, longitudinally, of the roof 101 and the third hatch 112c, adjacent to the second hatch 112b, is located towards the rear end 108, and in this embodiment the third hatch 112c is spaced from the rear end 108 by a fixed panel 117.

However, in alternative embodiments there may be only two adjacent hatches, for example the first and second hatches 112a, 112b, or there may be more than three movable hatches, for example four, five or six movable hatches. Furthermore, the assembly of movable hatches may be located at any position along the length of the roof 101, and the assembly of movable hatches may cover all or only part of the length of the roof 101. In addition, in the illustrated embodiment the hatches 112a, 112b, 112c extend across the entire width of the roof 101, but in alternative embodiments the hatches 112a, 112b, 112c may extend across only a part of the width of the roof 101. Still further, there may be a first assembly of movable hatches covering one part of the roof 101 and a second assembly of movable hatches covering another part of the roof 101. Any of these various alternative constructions can be combined in any combination and in any number in further embodiments of the present invention.

Fundamentally, the present invention requires at least two hatches which are adjacent to each other and arranged in series in a longitudinal direction X extending between the front and rear ends 107, 108 along the housing 105.

Referring to Figures 2 to 5, each of the first, second and third hatches 112a,112b, 112c is slidable in the longitudinal direction X, and at least the first and second hatches 112a, 112b can be lifted upwardly away from the sidewalls 102, 103. Accordingly, as shown in Figure 2, the first hatch 112a can be lifted and slid onto the second hatch 112b to form a stack 115 of the first and second hatches 112a, 112b, and to form an opening 119 in the roof 101. In the illustrated embodiment the opening 119 is adjacent to the front end 107.

As shown in Figure 3, the stack 115 of the first and second hatches 112a, 112b can be moved longitudinally along the housing 105, by a sliding action relative to the housing 105, so as at least partly to cover the opening 119, and this forms a further opening 121 in the middle of the roof 101.

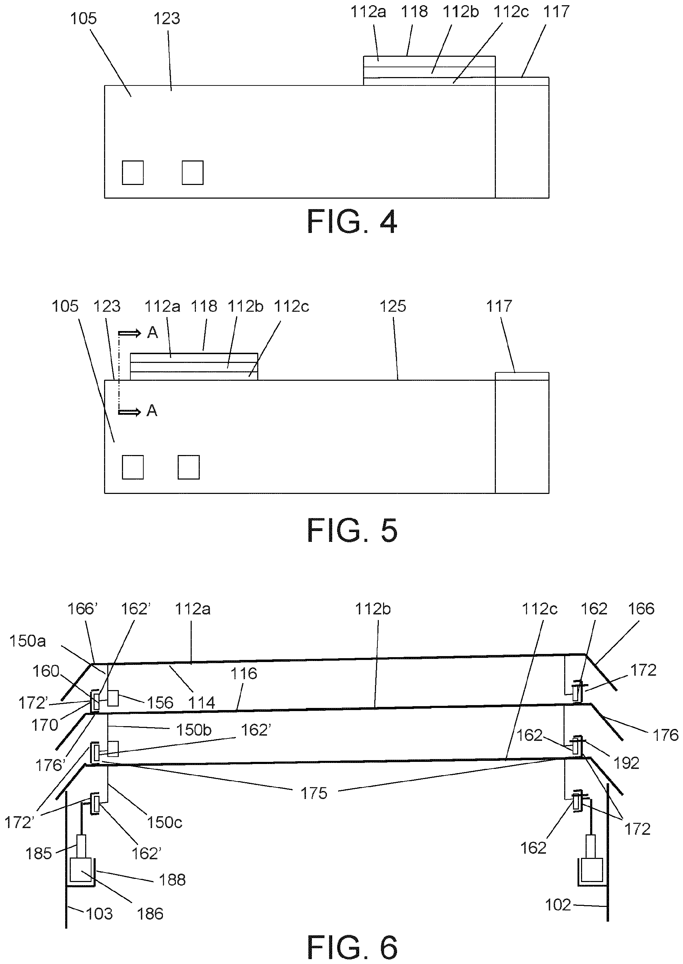

As shown in Figure 4, the stack 115 of the first and second hatches 112a, 112b can be lifted and slid onto the third hatch 112c to form a stack 118 of the first, second and third hatches 112a,112b,112c, and to form an enlarged opening 123 in the roof 101. In the illustrated embodiment the opening 123 is adjacent to the front end 107.

As shown in Figure 5, the stack 118 of the first, second and third hatches 112a,112b, 112c can be moved longitudinally along the housing 105, by a sliding action relative to the housing 105, so as at least partly to cover the enlarged opening 123, and this forms a further opening 125 in the roof 101 located towards (or in an alternative embodiment at) the rear end 108.

As can readily be seen from Figures 2 to 5, the present invention provides an assembly of hatches 112a, 112b, 112c on the roof 101 of a nacelle housing 105 that enables the location of an opening in the roof 101 to be varied in size and position in a highly versatile manner. A minimum of two adj acent movable hatches in the assembly is required to achieve this technical advantage.

The detailed structure of the assembly of hatches 112a,112b,112c, and the mechanism for lifting and moving the hatches 112a, 112b, 112c, will now be described with further reference to Figures 6 to 11.

Each of the first and second hatches 112a, 112b comprises a respective longitudinally-extending sliding mechanism 150a,150b whereby the respective hatch 112a, 112b is slidable in the longitudinal direction X.

The sliding mechanism 150a of the first hatch 112a comprises a first slidable component 160 which is affixed to a lower surface 114 of the first hatch 112a. The sliding mechanism 150b of the second hatch 112 comprises a second slidable component 170 which is affixed to an upper surface 116 of the second hatch 112b. The first and second components 160,170 are configured to engage in a slidable relationship.

The first slidable component 160 comprises a pair of first slide elements 162,162' respectively located along opposite longitudinal edges 166,166' of the first hatch 112a. The second slidable component 170 comprises a pair of second slide elements 172,172' respectively located along opposite longitudinal edges 176,176' of the second hatch 112b. Accordingly, the opposite longitudinal edges 166,166';176,176' of the first and second hatches 112a,112b are slidably attachable by a respective pair of the first and second slide elements 162, 162'; 172, 172'.

In the illustrated embodiment, the first slide element 162, 162' comprises a plurality of rollers 164, extending along the longitudinal direction, and the second slide element 172,172' comprises an elongate longitudinal channel 174 configured to receive the plurality of rollers 164. The elongate longitudinal channel 174 is preferably a C-shaped channel with the openings 175 of the two second slide elements 172,172' facing inwardly towards each other so that the two sets of rollers 164 of the first slide elements 162, 162' are laterally locked within the elongate longitudinal channels 174 of the second slide elements 172,172'.

In alternative embodiments, other slide mechanism constructions may be employed. For example, the positions of the rollers 164 and channels 174 could be inverted.

The nacelle further comprises a lifting mechanism 180.

The lifting mechanism 180 comprises a further pair of the second slide elements 172,172' which are respectively located beneath opposite longitudinal edges 184,184' of the assembly of first, second and third hatches 112a, 1 12b,1 12c. The further pair of the second slide elements (172,172') are positionable to engage the respective pair of the first slide elements 162,162' on the first hatch 112a. The lifting mechanism 180 comprises a first drive device 185 for raising or lowering the further pair of the second slide elements 172,172', and a second drive device 186 for moving the further pair of the second slide elements 172,172' longitudinally along the roof 101. The second drive device 186 comprises an elongate gantry 188 extending longitudinally along the housing 105.

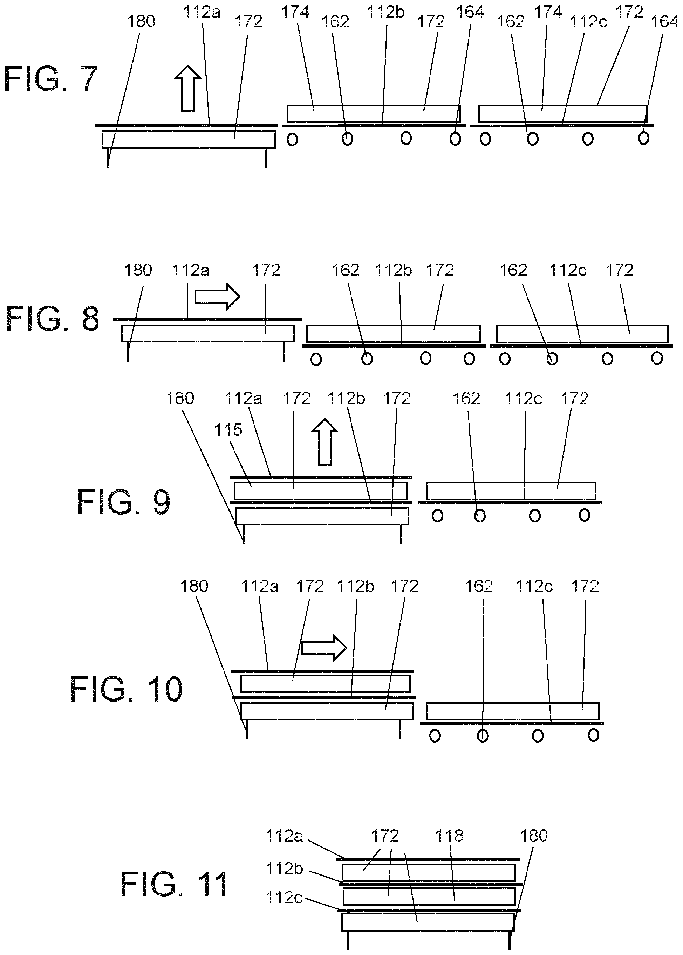

Referring to Figures 7 and 8, the lifting mechanism 180 is configured to lift the first hatch 112a from a closed position, shown in Figure 7, at which the first hatch 112a is fitted to the housing 105 and at least partly closes a roof opening 120 therein, to a partly-open raised position at which the first hatch 112a is higher than the adjacent second hatch 112b, shown in Figure 8.

Accordingly, the lifting mechanism 180 is configured to raise the further pair of second slide elements 172,172' from a first position to a second position, as shown by the arrow in Figure 7. In the first position shown in Figure 7 the first hatch 112a is in the closed position and the pair of first slide elements 162,162' on the first hatch 112a are engaged with the further pair of second slide elements 172,172'.

In the second position shown in Figure 8 the first hatch 112a is in the partly-open raised position and the further pair of the second slide elements 172,172' are aligned with the pair of second slide elements 172,172' on the second hatch 112b. The sliding mechanism 150a of the lifted first hatch 112a is slidably engageable with the sliding mechanism 150b of the adjacent second hatch 112b.

Accordingly, in the second position the pair of first slide elements 162,162' on the first hatch 112a can be slid longitudinally out of engagement with the further pair of second slide elements 172,172' and into engagement with the pair of the second slide elements 172,172' on the second hatch 112b, as shown by the arrow in Figure 8. The first hatch 112a is slidable from the partly-open raised position into a stacked configuration above the adjacent second hatch 112b to form a stack 115 of the first and second hatches 112a, 112b, as shown in Figure 9.

The lateral sliding of the first hatch 112a over the second hatch 112b may be achieved by incorporating a drive system 156 in one or both of the sliding mechanisms 150a, 150b. Alternatively, the lateral sliding of the first hatch 112a over the second hatch 112b may be carried out manually.

A locking mechanism 192 for releasably locking together vertically adjacent hatches 112a,112b,112c in a stacked configuration is preferably provided, which is shown schematically by the pins 192 in Figure 7.

The sliding mechanism 150b of the second hatch 112b further comprises a pair of the first slide elements 162, 162' of the second hatch 112b which are configured to engage in a slidable relationship with the further pair of second slide elements 172,172' of the lifting mechanism 180.

Accordingly, the lifting mechanism 180 is configured to move the further pair of second slide elements 172,172' from the second position shown in Figure 8 to a third position shown in Figure 9.

In the third position, the second hatch 112b has the first hatch 112a in a stacked configuration thereabove, the second hatch 112b is in the closed position and the pair of first slide elements 162, 162' on the second hatch 112b are engaged with the further pair of second slide elements 172,172' of the lifting mechanism 180.

When the pair of the first slide elements 162, 162' of the second hatch 112b are slidably engaged with the further pair of second slide elements 172,172' of the lifting mechanism 180, the second drive device 186 can move the stack 115 of the first and second hatches 112a, 112b longitudinally along the housing 105, as described above with reference to Figure 3.

As shown by the arrow in Figure 9, the lifting mechanism 180 is configured to lift the second hatch 112b, when the first hatch 112a is in the stacked configuration above the second hatch 112b, from a closed position, at which the second hatch 112b is fitted to the housing 105 and at least partly closes the roof opening 120 therein, to a partly-open raised position, as shown in Figure 10, at which the second hatch 112b is higher than the adjacent third hatch 112c which comprises a respective longitudinally-extending sliding mechanism 150c so that the third hatch 112c is slidable in the longitudinal direction. The sliding mechanism 150c of the third hatch 112c comprises a respective pair of the first slide elements 162, 162' and a respective pair of the second slide elements 172, 172'.

The sliding mechanism 150b of the second hatch 112b is slidably engageable with the sliding mechanism 150c of the adjacent third hatch 112c. When the second hatch 112b is in the partly-open raised position, as shown by the arrow in Figure 10 the second hatch 112b is slidable into a stacked configuration above the adjacent third hatch 112c to form a stack 118 of the first, second and third hatches 112a,112b,112c, as shown in Figure 11.

Again, the lateral sliding of the second hatch 112b over the third hatch 112c may be achieved by incorporating a drive system in one or both of the sliding mechanisms 150b, 150c. Alternatively, the lateral sliding of the second hatch 112b over the third hatch 112c may be carried out manually.

The lifting mechanism 180 is accordingly configured to move the further pair of second slide elements 172,172' from the third position shown in Figure 9 to a fourth position shown in Figure 10.

In the fourth position, the second hatch 112b is in a partly-open raised position and the further pair of second slide elements 172,172' are aligned with the pair of second slide elements 172, 172' on the third hatch 112c. The pair of first slide elements 162, 162' on the second hatch 112b can be slid longitudinally out of engagement with the further pair of second slide elements 172,172' and into engagement with the pair of the second slide elements 172, 172' on the third hatch 112c to form the stack 118 of the first, second and third hatches 112a, 112b, 112c.

The lifting mechanism 180 is furthermore configured to move the further pair of second slide elements 172,172' from the fourth position to a fifth position, shown in Figure 11 wherein in the fifth position the first, second and third hatches 112a, 112b,112c form the stack 118 thereof, the third hatch 112c is in the closed position and the pair of first slide elements 162, 162' on the third hatch 112c are engaged with the further pair of second slide elements 172,172' of the lifting mechanism 180. In the fifth position, the second drive device 186 can move the stack 118 of the first, second and third hatches 112a,112b,112c longitudinally along the housing 105 as described above with reference to Figure 5.

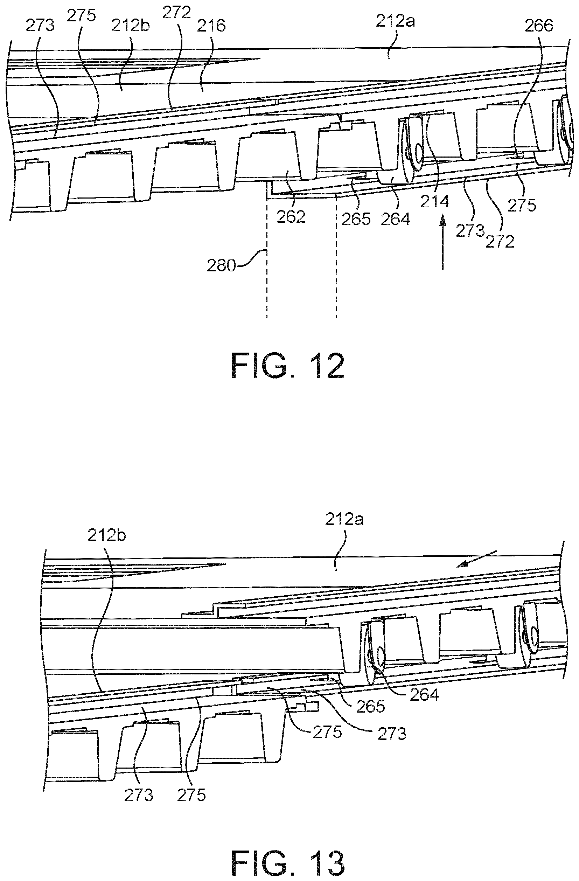

Figures 12 to 14 illustrate another preferred embodiment of the present invention. Figure 12 shows the first hatch 212a and the second hatch 212b in a closed position; Figure 13 shows the first hatch 212a in a raised partly-open position adjacent to the second hatch 212b; and Figure 14 shows the first hatch 212a partly slid towards a fully open position above the second hatch 212b. In these drawings, only one longitudinal edge of the first and second hatches 212a, 212b is shown, and on the other longitudinal edge the structure is a mirror-image as compared to the illustrated edge. A third hatch, and further hatches, may be provided as in the first embodiment, but this is not illustrated.

In this embodiment, the first slide element 262 is fitted to the lower surface 214 of each of the first and second hatches 212a, 212b, and any additional hatch, on each longitudinal side of the respective hatch. The first slide element 262 comprises a plurality of rollers 264 and a longitudinal flange 265 adjacent thereto. The longitudinal flange 265 is oriented inwardly towards the central longitudinal axis of the housing. The longitudinal flange 265 is preferably horizontal. The longitudinal flange 265 may comprise a series of longitudinally spaced flange elements 266 or a single elongate flange.

For clarity of illustration, the plurality of rollers 264 are shown on the first hatch 212a but not on the second hatch 212b which is similarly provided with a respective plurality of rollers 264 to enable the second hatch 212b to be opened to be slid over a third hatch or a fixed p[art of the roof.

The second slide element 272 is fitted to the upper surface 216 of the second hatch 212b, and any additional hatch including, optionally, the first hatch 212a, on each longitudinal side of the respective hatch. The second slide element 272 is also fitted to the lifting mechanism, as described earlier with reference to the first embodiment. The second slide element 272 comprises a longitudinal guide surface 273 over which the plurality of rollers 264 are configured to roll in a longitudinal direction and an elongate longitudinal channel 275 configured to receive the longitudinal flange 265. The opposed longitudinal flanges 265 on the opposite sides of the roof are received in the opposed elongate longitudinal channels 275, which arrangement prevents relative movement of the linked hatches in a vertical direction and in a transverse horizontal direction.

As shown in Figure 12, in a closed position the plurality of rollers 264 of the first hatch 212a are disposed on the longitudinal guide surface 273 of the second slide element 272 which is fitted to the lifting mechanism 280, which is represented by dashed lines in Figure 12. The longitudinal flange 265 of the first hatch 212a is received in the elongate longitudinal channel 275 of the second slide element 272 which is fitted to the lifting mechanism 280.

As shown in Figure 13, the first hatch 212a is lifted by the lifting mechanism 280 to a partly-open position adjacent to the second hatch 212b, so that the longitudinal guide surfaces 273 on the second hatch 212b and fitted to the lifting mechanism 280 are aligned, and so that the elongate longitudinal channels 275 on the second hatch 212b and fitted to the lifting mechanism 280 are also aligned.

As shown in Figure 14, the first hatch 212a is then slid towards a fully open position above the second hatch 212b, by rolling the plurality of rollers 264 of the first hatch 212a from the longitudinal guide surface 273 of the lifting mechanism onto the longitudinal guide surface 273 of the second hatch 212b. Simultaneously, the longitudinal flange 265 of the first hatch 212a is slid from the elongate longitudinal channel 275 of the lifting mechanism into the elongate longitudinal channel 275 of the second hatch 212b.

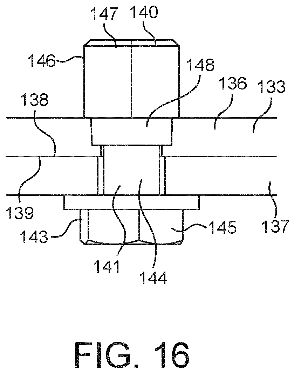

In any of the embodiments of the present invention, the movable hatches may be removably affixed to the housing so that when the respective hatch is in a closed position, the hatch is securely affixed to the remainder of the housing and can enhance the structural integrity of the housing. Referring to Figure 15, there is shown a nut for a threaded bolt and nut assembly for removably affixing the roof hatches to the housing, and Figure 16 shows a threaded bolt and nut assembly comprising the nut of Figure 15 removably affixing a roof hatch to the housing.

As shown in Figures 15 and 16, a fixing mechanism 140 comprises a threaded bolt and nut assembly 143 which can removably affix together an outer wall 136, for example of a roof hatch 112, 212 as described hereinbefore, and an inner wall 137, for example of a sidewall 102, 103 of the housing 105 as described hereinbefore. The outer and inner walls 137 have respective longitudinally-extending opposed facing surfaces 138, 139 which define a pair of opposed load bearing surfaces of a structural joint 133 between the roof hatch 112, 212 and the housing 105.

The fixing mechanism 140 comprises a mechanical element 141 which extends through the thickness of the pair of outer and inner walls 137 at the pair of opposed load bearing surfaces 138, 139. The bolt 144 extends through the thickness of the pair of outer and inner walls 136, 137, and a head 145 of the bolt 144, with an optional washer, and the nut 146 are on opposite sides of the pair of outer and inner walls 136, 137. A gasket (not illustrated) may be disposed between the pair of outer and inner walls 136, 137.

The particular construction of the nut 146 can be pre-joined to the outer wall 136 of the hatch and remain securely connected thereto in the absence of the bolt 144, which simplifies the affixing of the respective hatch in a closed position, and release of the respective hatch to be slidable to an open position. The nut 146 permits the fixing mechanism 140 to be assembled and disassembled, and then re-assembled, with access only from the interior space 106 of the housing 105.

The nut 146 comprises a head part 147 having a hexagonal outer surface for engagement by a wrench, an integral shaft part 148 adjacent to the head part 147, and a cylindrical blind bore 149 which extends longitudinally along the shaft part 148. The blind bore 149 has an open end 150 at a free end 151 of the shaft part 148 and a closed end 152 within the nut 146, typically within the head part 147. The shaft part 148 has an external surface of rotation 153 with a first helical thread 154 and the blind bore 149 has an internal cylindrical surface 155 with a second helical thread 156. The first and second helical threads 154, 156 have opposite rotational directions.

The external surface of rotation 153 of the shaft part 148 is frustoconically tapered and reduces in radius in a direction towards the free end 151. Typically, the frustoconically tapered surface 153 has a taper angle of from 1 to 5 degrees, optionally from 1 to 2 degrees, relative to a longitudinal axis of the shaft part 148.

The external surface 153 of the shaft part 148 is threadably screwed, in one rotational direction, typically an anti-clockwise or reverse rotational direction, into the outer wall 136 of the hatch by the first helical thread 154. The tapered external surface 153 of the shaft part 148 securely fits the nut 146 onto the outer wall 136. An adhesive, for example an epoxy resin adhesive, may also be provided between the external surface 153 and the outer wall 136 to enhance the strength and durability of the bond.

The bolt 144 extends through a pre-drilled hole 157 in the pair of outer and inner walls 136, 137 from the inner wall 137 of the housing and is threadably screwed, in the opposite rotational direction, typically a clockwise or forward rotational direction, into the blind bore 149 to securely affix together the pair of outer and inner walls 136, 137.

By providing that the nut 146 is threadably screwed into the outer wall 136 by the first helical thread 154, and the bolt 144 extends outwardly through the pair of outer and inner walls 136, 137 from the inner wall 137, the wall elements comprised of a fibre-reinforced polymer composite material can be assembled together, disassembled, and re-assembled, from the interior space 106.

The present invention accordingly provides a versatile roof structure of a nacelle housing which can enable enhanced access to the interior space of the nacelle, for example during the installation of the wind turbine or after installation during service which requires machinery components to be installed into or removed from the interior space via an opening in the roof structure. Plural movable hatches are provided which can be moved into a stacked position and can provide one or more openings of varying length and varying position along the length of the roof.

## Claims

1. A nacelle for a wind turbine, wherein the nacelle (100) comprises a nacelle cover formed by an elongate housing (105) defining an interior space for containing machinery components of the wind turbine, the housing (105) comprising opposite sidewalls (102, 103), a floor (104) and a roof (101), the housing (105) having a front end (107) for mounting to a tower (122) of the wind turbine, and an opposite rear end (108), wherein the roof (101) comprises an assembly of first and second hatches (112a,112b) which are adj acent to each other and arranged in series in a longitudinal direction (X) extending between the front and rear ends (107, 108) along the housing (105), each of the first and second hatches (112a,112b) comprising a respective longitudinally-extending sliding mechanism (150a,150b) whereby the respective hatch (112a, 112b) is slidable in the longitudinal direction, and **characterised in that** the nacelle further comprises a lifting mechanism (180) which is configured to lift the first hatch (112a) from a closed position, at which the first hatch (112a) is fitted to the housing (105) and at least partly closes a roof opening (120) therein, to a partly-open raised position at which the first hatch (112a) is higher than the adjacent second hatch (112b), and wherein the sliding mechanism (150a) of the lifted first hatch (112a) is slidably engageable with the sliding mechanism (150b) of the adjacent second hatch (112b) whereby the first hatch (112a) is slidable from the partly-open raised position into a stacked configuration above the adjacent second hatch (112b) to form a stack (115) of the first and second hatches (112a, 112b).

2. A nacelle according to claim 1, **characterised in that** the sliding mechanism (150a) of the first hatch (112a) comprises a first slidable component (160) and the sliding mechanism (150b) of the second hatch (112) comprises a second slidable component (170), wherein the first and second components (160,170) are configured to engage in a slidable relationship.

3. A nacelle according to claim 2, **characterised in that** the first slidable component (160) is affixed to a lower surface (114) of the first hatch (112a) and the second slidable component (170) is affixed to an upper surface (116) of the second hatch (112b).

4. A nacelle according to claim 3, **characterised in that** the first slidable component (160) comprises a pair of first slide elements (162,162') respectively located along opposite longitudinal edges (166,166') of the first hatch (112a) and the second slidable component (170) comprises a pair of second slide elements (172,172') respectively located along opposite longitudinal edges (176,176') of the second hatch (112b), wherein the opposite longitudinal edges (166,166'; 176,176') of the first and second hatches (112a,112b) are slidably attachable by a respective pair of the first and second slide elements (162, 162'; 172, 172').

5. A nacelle according to claim 4, **characterised in that** the first slide element (162, 162') comprises a plurality of rollers (164) and the second slide element (172,172') comprises an elongate longitudinal channel (174) configured to receive the plurality of rollers (164).

6. A nacelle according to claim 4, **characterised in that** the first slide element (262) comprises a plurality of rollers (264) and a longitudinal flange (265) and the second slide element (272) comprises a longitudinal guide surface (273) over which the plurality of rollers (264) are configured to roll in a longitudinal direction and an elongate longitudinal channel (275) configured to receive the longitudinal flange (265).

7. A nacelle according to any one of claims 2 to 6, **characterised in that** the lifting mechanism (180) comprises a further second slidable component (170), which preferably comprises a further pair of the second slide elements (172,172') which are respectively located beneath opposite longitudinal edges (184,184') of the assembly of first and second hatches (112a,112b), the further pair of the second slide elements (172,172') being positionable to engage the respective pair of the first slide elements (162,162') on the first hatch (112a), wherein the lifting mechanism (180) comprises a first drive device (185) for raising or lowering the second slidable component (170), preferably comprising the further pair of the second slide elements (172,172'), and a second drive device (186) for moving the second slidable component (170), preferably comprising the further pair of the second slide elements (172,172'), longitudinally along the roof (101).

8. A nacelle according to claim 7, **characterised in that** the second drive device (186) comprises an elongate gantry (188) extending longitudinally along the housing (105).

9. A nacelle according to claim 7 or claim 8, **characterised in that** the lifting mechanism (180) is configured to raise the further pair of second slide elements (172,172') from a first position to a second position, wherein in the first position the first hatch (112a) is in the closed position and the pair of first slide elements (162,162') on the first hatch (112a) are engaged with the further pair of second slide elements (172,172'), and in the second position the first hatch (112a) is in the partly-open raised position and the further pair of the second slide elements (172,172') are aligned with the pair of second slide elements (172,172') on the second hatch (112b) whereby the pair of first slide elements (162,162') on the first hatch (112a) can be slid longitudinally out of engagement with the further pair of second slide elements (172,172') and into engagement with the pair of the second slide elements (172,172') on the second hatch (112b) to form the stack (115) of the first and second hatches (112a, 112b).

10. A nacelle according to claim 9, **characterised in that** the sliding mechanism (150b) of the second hatch (112b) further comprises a first slidable component (160) which comprises a pair of the first slide elements (162, 162') of the second hatch (112b) which are configured to engage in a slidable relationship with the further pair of second slide elements (172,172') of the lifting mechanism (180), optionally wherein when the pair of the first slide elements (162, 162') of the second hatch (112b) are slidably engaged with the further pair of second slide elements (172,172') of the lifting mechanism (180), the second drive device (186) can move the stack (115) of the first and second hatches (112a, 112b) longitudinally along the housing (105).

11. A nacelle according to any preceding claim, **characterised in that** the lifting mechanism (180) is configured to lift the second hatch (112b), when the first hatch (112a) is in the stacked configuration above the second hatch (112b), from a closed position, at which the second hatch (112b) is fitted to the housing (105) and at least partly closes a roof opening (120) therein, to a partly-open raised position at which the second hatch (112b) is higher than an adjacent third hatch (112c) which comprises a respective longitudinally-extending sliding mechanism (150c) whereby the third hatch (112c) is slidable in the longitudinal direction, and wherein the sliding mechanism (150b) of the second hatch (112b) is slidably engageable with the sliding mechanism (150c) of the adj acent third hatch (112c) whereby when the second hatch (112b) is in the partly-open raised position the second hatch (112b) is slidable into a stacked configuration above the adjacent third hatch (112c) to form a stack (118) of the first, second and third hatches (112a, 112b, 112c).

12. A nacelle according to claim 11, when appendant on claim 9 or any claim appendant thereon, **characterised in that** the lifting mechanism (180) is configured to move the further pair of second slide elements (172,172') from the second position to a third position, wherein in the third position the second hatch (112b) has the first hatch (112a) in a stacked configuration thereabove, and the second hatch (112b) is in the closed position and the pair of first slide elements (162, 162') on the second hatch (112b ) are engaged with the further pair of second slide elements (172,172') of the lifting mechanism (180), optionally wherein the sliding mechanism (150c) of the third hatch (112c) comprises a first slidable component (160) which comprises a respective pair of the first slide elements (162, 162') and a second slidable component (170) which comprises a respective pair of the second slide elements (172, 172'), and the lifting mechanism (180) is configured to move the further pair of second slide elements (172,172') from the third position to a fourth position, wherein in the fourth position the second hatch (112b) is in a partly-open raised position and the further pair of second slide elements (172,172') are aligned with the pair of second slide elements (172, 172') on the third hatch (112c) whereby the pair of first slide elements (162, 162') on the second hatch (112b) can be slid longitudinally out of engagement with the further pair of second slide elements (172,172') and into engagement with the pair of the second slide elements (172, 172') on the third hatch (112c) to form the stack (118) of the first, second and third hatches (112a,112b,112c).

13. A nacelle according to claim 12, **characterised in that** the lifting mechanism (180) is configured to move the further pair of second slide elements (172,172') from the fourth position to a fifth position, wherein in the fifth position the first, second and third hatches (112a,112b,112c) form the stack (118) thereof, the third hatch (112c) is in the closed position and the pair of first slide elements (162, 162') on the third hatch (112c) are engaged with the further pair of second slide elements (172,172') of the lifting mechanism (180), and wherein the second drive device (186) can move the stack (118) of the first, second and third hatches (112a, 112b, 112c) longitudinally along the housing (105)from the fifth position.

14. A nacelle according to any preceding claim, **characterised in that** the roof (101) further comprises a locking mechanism (192) for releasably locking together vertically adjacent hatches (112a, 112b, 112c) in a stacked configuration.

15. A nacelle according to any preceding claim, **characterised in that** in a closed position at least one of the first and second hatches (112a, 112b; 212a, 212b) is removably affixed to the housing (105) by a threaded bolt and nut assembly (143) comprising a nut (146) having an outer first helical thread (154) which is threadably screwed into a wall (136) of the hatch, and a bolt (144) which extends through a wall (137) of the housing (105) and the wall (136) of the hatch and is threadably screwed into an inner second helical thread (156) of the nut (146), optionally wherein the nut (146) comprises a head part (147), an integral shaft part (148) adjacent to the head part (147), and a cylindrical blind bore (149) which extends longitudinally along the shaft part (148) and has an open end (150) at a free end (151) of the shaft part (148) and a closed end (152) within the nut (146), wherein the shaft part (148) has an external surface of rotation (153) with the first helical thread (154) and the blind cylindrical blind bore (149) has an internal cylindrical surface (155) with the second helical thread (156), wherein the first and second helical threads (154, 156) have opposite rotational directions, further optionally wherein the external surface of rotation (153) of the shaft part (148) is frustoconically tapered and reduces in radius in a direction towards the free end (151).

## Patentansprüche

1. Gondel für eine Windturbine, wobei die Gondel (100) eine Gondelabdeckung aufweist, die durch ein längliches Gehäuse (105) gebildet wird, das einen Innenraum zur Aufnahme von Maschinenkomponenten der Windturbine definiert, wobei das Gehäuse (105) gegenüberliegende Seitenwände (102, 103), einen Boden (104) und ein Dach (101) aufweist, wobei das Gehäuse (105) ein vorderes Ende (107) zur Montage an einem Turm (122) der Windturbine und ein gegenüberliegendes hinteres Ende (108) aufweist, wobei das Dach (101) eine Anordnung von ersten und zweiten Klappen (112a, 112b) aufweist, die aneinander angrenzen und in einer Längsrichtung (X), die sich zwischen den vorderen und hinteren Enden (107, 108) entlang des Gehäuses (105) erstreckt, in Reihe angeordnet sind, wobei jede der ersten und zweiten Klappen (112a, 112b) einen jeweiligen sich in Längsrichtung erstreckenden Gleitmechanismus (150a, 150b) aufweist, wodurch die jeweilige Klappe (112a, 112b) in der Längsrichtung verschiebbar ist, und **dadurch gekennzeichnet, dass** die Gondel ferner einen Hebemechanismus (180) aufweist, der konfiguriert ist, um die erste Klappe (112a) aus einer geschlossenen Position anzuheben, an der die erste Klappe (112a) am Gehäuse (105) angebracht ist und eine Dachöffnung (120) darin zumindest teilweise verschließt, in eine teilweise geöffnete angehobene Position, in der die erste Klappe (112a) höher als die benachbarte zweite Klappe (112b) ist, und wobei der Schiebemechanismus (150a) der angehobenen ersten Klappe (112a) verschiebbar mit dem Schiebemechanismus (150b) der benachbarten zweiten Klappe (112b) in Eingriff bringbar ist, wodurch die erste Klappe (112a) aus der teilweise geöffneten angehobenen Position in eine gestapelte Konfiguration über der benachbarten zweiten Klappe (112b) verschiebbar ist, um einen Stapel (115) der ersten und zweiten Klappen (112a, 112b) zu bilden.

2. Gondel nach Anspruch 1, **dadurch gekennzeichnet, dass** der Schiebemechanismus (150a) der ersten Klappe (112a) eine erste verschiebbare Komponente (160) aufweist und der Schiebemechanismus (150b) der zweiten Klappe (112) eine zweite verschiebbare Komponente (170) aufweist, wobei die ersten und zweiten Komponenten (160, 170) konfiguriert sind, um in eine verschiebbare Beziehung einzugreifen.

3. Gondel nach Anspruch 2, **dadurch gekennzeichnet, dass** die erste verschiebbare Komponente (160) an einer unteren Fläche (114) der ersten Klappe (112a) befestigt ist und die zweite verschiebbare Komponente (170) an einer oberen Fläche (116) der zweiten Klappe (112b) befestigt ist.

4. Gondel nach Anspruch 3, **dadurch gekennzeichnet, dass** die erste verschiebbare Komponente (160) ein Paar erster Gleitelemente (162, 162') aufweist, die jeweils entlang gegenüberliegender Längskanten (166, 166') der ersten Klappe (112a) angeordnet sind, und die zweite verschiebbare Komponente (170) ein Paar zweiter Gleitelemente (172, 172') aufweist, die jeweils entlang gegenüberliegender Längskanten (176, 176') der zweiten Klappe (112b) angeordnet sind, wobei die gegenüberliegenden Längskanten (166, 166' ; 176, 176') der ersten und zweiten Klappen (112a, 112b) durch ein entsprechendes Paar der ersten und zweiten Gleitelemente (162, 162' ; 172, 172') gleitend anbringbar sind.

5. Gondel nach Anspruch 4, **dadurch gekennzeichnet, dass** das erste Gleitelement (162, 162') mehrere Rollen (164) aufweist und das zweite Gleitelement (172, 172') einen länglichen Längskanal (174) aufweist, der konfiguriert ist, um die mehreren Rollen (164) aufzunehmen.

6. Gondel nach Anspruch 4, **dadurch gekennzeichnet, dass** das erste Gleitelement (262) mehrere Rollen (264) und einen Längsflansch (265) aufweist und das zweite Gleitelement (272) eine Längsführungsfläche (273), über die mehreren Rollen (264) konfiguriert sind, um in einer Längsrichtung zu rollen, und einen länglichen Längskanal (275), der konfiguriert ist, um den Längsflansch (265) aufzunehmen, aufweist.

7. Gondel nach einem der Ansprüche 2 bis 6, **dadurch gekennzeichnet, dass** der Hebemechanismus (180) eine weitere zweite verschiebbare Komponente (170) aufweist, die vorzugsweise ein weiteres Paar der zweiten Gleitelemente (172, 172') aufweist, die jeweils unter gegenüberliegenden Längskanten (184, 184') der Anordnung aus ersten und zweiten Klappen (112a, 112b) angeordnet sind, wobei das weitere Paar der zweiten Gleitelemente (172, 172') positionierbar ist, um mit dem jeweiligen Paar der ersten Gleitelemente (162, 162') an der ersten Klappe (112a) in Eingriff zu kommen, wobei der Hebemechanismus (180) eine erste Antriebsvorrichtung (185) zum Anheben oder Absenken der zweiten verschiebbaren Komponente (170), die vorzugsweise das weitere Paar der zweiten Schiebeelemente (172, 172') aufweist, und eine zweite Antriebsvorrichtung (186) zum Bewegen der zweiten verschiebbaren Komponente (170), die vorzugsweise das weitere Paar der zweiten Gleitelemente (172, 172') aufweist, in Längsrichtung entlang des Daches (101) aufweist.

8. Gondel nach Anspruch 7, **dadurch gekennzeichnet, dass** die zweite Antriebsvorrichtung (186) ein längliches Portal (188) aufweist, das sich in Längsrichtung entlang des Gehäuses (105) erstreckt.

9. Gondel nach Anspruch 7 oder Anspruch 8, **dadurch gekennzeichnet, dass** der Hebemechanismus (180) konfiguriert ist, um das weitere Paar von zweiten Gleitelementen (172, 172') von einer ersten Position in eine zweite Position anzuheben, wobei in der ersten Position die erste Klappe (112a) in der geschlossenen Position ist und das Paar von ersten Gleitelementen (162, 162') an der ersten Klappe (112a) mit dem weiteren Paar von zweiten Gleitelementen (172, 172') in Eingriff steht, und in der zweiten Position die erste Klappe (112a) in der teilweise geöffneten angehobenen Position ist und das weitere Paar der zweiten Gleitelemente (172, 172') mit dem Paar der zweiten Gleitelemente (172, 172') an der zweiten Klappe (112b) ausgerichtet sind, wodurch das Paar der ersten Gleitelemente (162, 162') an der ersten Klappe (112a) in Längsrichtung aus dem Eingriff mit dem weiteren Paar der zweiten Gleitelemente (172, 172') und in den Eingriff mit dem Paar der zweiten Gleitelemente (172, 172') an der zweiten Klappe (112b) verschoben werden kann, um den Stapel (115) der ersten und zweiten Klappen (112a, 112b) zu bilden.

10. Gondel nach Anspruch 9, **dadurch gekennzeichnet, dass** der Schiebemechanismus (150b) der zweiten Klappe (112b) ferner eine erste verschiebbare Komponente (160) aufweist, die ein Paar der ersten Gleitelemente (162, 162') der zweiten Klappe (112b) aufweist, die konfiguriert sind, um in einer verschiebbaren Beziehung mit dem weiteren Paar der zweiten Gleitelemente (172, 172') des Hebemechanismus (180) einzugreifen, wobei optional, wenn das Paar der ersten Gleitelemente (162, 162') der zweiten Klappe (112b) gleitend mit dem weiteren Paar der zweiten Gleitelemente (172, 172') des Hebemechanismus (180) in Eingriff steht, die zweite Antriebsvorrichtung (186) den Stapel (115) der ersten und zweiten Klappen (112a, 112b) in Längsrichtung entlang des Gehäuses (105) bewegen kann.

11. Gondel nach einem der vorhergehenden Ansprüche, **dadurch gekennzeichnet, dass** der Hebemechanismus (180) konfiguriert ist, um die zweite Klappe (112b), wenn sich die erste Klappe (112a) in der gestapelten Konfiguration über der zweiten Klappe (112b) befindet, aus einer geschlossenen Position, an der die zweite Klappe (112b) am Gehäuse (105) angebracht ist und eine Dachöffnung (120) darin zumindest teilweise verschließt, in eine teilweise offene angehobene Position, an der die zweite Klappe (112b) höher ist als eine benachbarte dritte Klappe (112c), die einen jeweiligen sich in Längsrichtung erstreckenden Schiebemechanismus (150c) aufweist, wodurch die dritte Klappe (112c) in der Längsrichtung verschiebbar ist, und wobei der Schiebemechanismus (150b) der zweiten Klappe (112b) verschiebbar mit dem Schiebemechanismus (150c) der benachbarten dritten Klappe (112c) in Eingriff bringbar ist, wodurch, wenn die zweite Klappe (112b) in der teilweise geöffneten angehobenen Position ist, die zweite Klappe (112b) in eine gestapelte Konfiguration über der benachbarten dritten Klappe (112c) verschiebbar ist, um einen Stapel (118) den ersten, zweiten und dritten Klappen (112a, 112b, 112c) zu bilden.

12. Gondel nach Anspruch 11, wenn abhängig von Anspruch 9 oder einem von diesem abhängigen Anspruch, **dadurch gekennzeichnet, dass** der Hebemechanismus (180) konfiguriert ist, um das weitere Paar von zweiten Gleitelementen (172, 172') von der zweiten Position in eine dritte Position zu bewegen, wobei in der dritten Position die zweite Klappe (112b) die erste Klappe (112a) in einer gestapelten Konfiguration darüber aufweist, und die zweite Klappe (112b) in der geschlossenen Position ist und das Paar erster Gleitelemente (162, 162') an der zweiten Klappe (112b) mit dem weiteren Paar zweiter Gleitelemente (172, 172') des Hebemechanismus (180) in Eingriff steht, wobei optional der Gleitmechanismus (150c) der dritten Klappe (112c) eine erste verschiebbare Komponente (160) aufweist, die ein jeweiliges Paar der ersten Gleitelemente (162, 162') und eine zweite verschiebbare Komponente (170) aufweist, die ein jeweiliges Paar der zweiten Gleitelemente (172, 172') aufweist, und der Hebemechanismus (180) konfiguriert ist, um das weitere Paar zweiter Gleitelemente (172, 172') von der dritten Position in eine vierte Position zu bewegen, wobei in der vierten Position die zweite Klappe (112b) in einer teilweise geöffneten, angehobenen Position ist und das weitere Paar zweiter Gleitelemente (172, 172') mit dem Paar von zweiten Gleitelementen (172, 172') an der dritten Klappe (112c) ausgerichtet sind, wodurch das Paar von ersten Gleitelementen (162, 162') an der zweiten Klappe (112b) in Längsrichtung aus dem Eingriff mit dem weiteren Paar von zweiten Gleitelementen (172, 172') und in Eingriff mit dem Paar von zweiten Gleitelementen (172, 172') an der dritten Klappe (112c) verschoben werden kann, um den Stapel (118) von ersten, zweiten und dritten Klappen (112a, 112b, 112c) zu bilden.

13. Gondel nach Anspruch 12, **dadurch gekennzeichnet, dass** der Hebemechanismus (180) konfiguriert ist, um das weitere Paar zweiter Gleitelemente (172, 172') von der vierten Position in eine fünfte Position zu bewegen, wobei in der fünften Position die ersten, zweiten und dritten Klappen (112a, 112b, 112c) den Stapel (118) davon bilden, die dritte Klappe (112c) in der geschlossenen Position ist und das Paar erster Gleitelemente (162, 162') an der dritten Klappe (112c) mit dem weiteren Paar von zweiten Gleitelementen (172, 172') des Hebemechanismus (180) in Eingriff steht, und wobei die zweite Antriebsvorrichtung (186) den Stapel (118) der ersten, zweiten und dritten Klappen (112a, 112b, 112c) in Längsrichtung entlang des Gehäuses (105) aus der fünften Position bewegen kann.

14. Gondel nach einem der vorhergehenden Ansprüche, **dadurch gekennzeichnet, dass** das Dach (101) ferner einen Verriegelungsmechanismus (192) zum lösbaren Verriegeln von vertikal benachbarten Klappen (112a, 112b, 112c) in einer gestapelten Konfiguration aufweist.

15. Gondel nach einem der vorhergehenden Ansprüche, **dadurch gekennzeichnet, dass** in einer geschlossenen Position wenigstens eine der ersten und zweiten Klappen (112a, 112b; 212a, 212b) durch eine Gewindebolzen- und Mutteranordnung (143) abnehmbar am Gehäuse (105) befestigt ist, die eine Mutter (146) umfasst mit einem äußeren ersten Schraubengewinde (154), das in eine Wand (136) der Klappe eingeschraubt ist, und einem Bolzen (144), der sich durch eine Wand (137) des Gehäuses (105) und die Wand (136) der Klappe erstreckt und in ein inneres zweites Schraubengewinde (156) der Mutter (146) eingeschraubt ist, wobei optional die Mutter (146) einen Kopfteil (147), einen integralen Schaftteil (148) neben dem Kopfteil (147) und eine zylindrische Sackbohrung (149) aufweist, die sich in Längsrichtung entlang des Schaftteils (148) erstreckt und ein offenes Ende (150) an einem freien Ende (151) des Schaftteils (148) und ein geschlossenes Ende (152) innerhalb der Mutter (146) aufweist, wobei der Schaftteil (148) eine äußere Rotationsfläche (153) mit dem ersten Schraubengewinde (154) aufweist und die zylindrische Blindbohrung (149) eine innere zylindrische Fläche (155) mit dem zweiten Schraubengewinde (156) aufweist, wobei die ersten und zweiten schraubenförmigen Gewinde (154, 156) entgegengesetzte Drehrichtungen haben, wobei ferner optional die äußere Rotationsfläche (153) des Schaftteils (148) kegelstumpfförmig verjüngt ist und sich der Radius in einer Richtung zum freiem Ende (151) verringert.

## Revendications

1. Nacelle destinée à une éolienne, dans laquelle la nacelle (100) comprend une enveloppe de nacelle formée d'un habitacle allongé (105) définissant un espace intérieur servant à contenir des composants de machinerie de l'éolienne, l'habitacle (105) comprenant des parois latérales opposées (102, 103), un plancher (104) et un toit (101), l'habitacle (105) ayant une extrémité avant (107) destinée à être montée sur un mât (122) de l'éolienne et une extrémité arrière opposée (108), dans laquelle le toit (101) comprend un ensemble de première et deuxième trappes (112a, 112b) qui sont adjacentes l'une à l'autre et disposées en série dans une direction longitudinale (X) s'étendant entre les extrémités avant et arrière (107, 108) le long de l'habitacle (105), chacune des première et deuxième trappes (112a, 112b) comprenant un respectif mécanisme coulissant s'étendant longitudinalement (150a, 150b), moyennant quoi la trappe respective (112a, 112b) peut coulisser dans la direction longitudinale, et
**caractérisée en ce que** la nacelle comprend en outre un mécanisme de levage (180) qui est configuré pour soulever la première trappe (112a) depuis une position fermée dans laquelle la première trappe (112a) est montée sur l'habitacle (105) et y ferme au moins partiellement une ouverture de toit (120), jusqu'à une position relevée partiellement ouverte dans laquelle la première trappe (112a) est plus haute que la deuxième trappe adjacente (112b), et dans laquelle le mécanisme coulissant (150a) de la première trappe soulevée (112a) peut se mettre en prise de manière coulissante avec le mécanisme coulissant (150b) de la deuxième trappe adjacente (112b), moyennant quoi la première trappe (112a) peut coulisser depuis la position relevée partiellement ouverte jusqu'à une configuration empilée au-dessus de la deuxième trappe adjacente (112b) afin de former un empilement (115) des première et deuxième trappes (112a, 112b).

2. Nacelle selon la revendication 1, **caractérisée en ce que** le mécanisme coulissant (150a) de la première trappe (112a) comprend un premier composant coulissable (160) et le mécanisme coulissant (150b) de la deuxième trappe (112) comprend un deuxième composant coulissable (170), dans laquelle les premier et deuxième composants (160, 170) sont configurés pour se mettre en prise dans une relation de coulissement.

3. Nacelle selon la revendication 2, **caractérisée en ce que** le premier composant coulissable (160) est fixé à une surface inférieure (114) de la première trappe (112a) et le deuxième composant coulissable (170) est fixé à une surface supérieure (116) de la deuxième trappe (112b).

4. Nacelle selon la revendication 3, **caractérisée en ce que** le premier composant coulissable (160) comprend une paire de premiers éléments de coulissement (162, 162') qui sont situés respectivement le long de bords longitudinaux opposés (166, 166') de la première trappe (112a), et le deuxième composant coulissable (170) comprend une paire de deuxièmes éléments de coulissement (172, 172') qui sont situés respectivement le long de bords longitudinaux opposés (176, 176') de la deuxième trappe (112b), dans laquelle les bords longitudinaux opposés (166, 166' ; 176, 176') des première et deuxième trappes (112a, 112b) peuvent être fixés de manière coulissante par le biais d'une paire respective desdits premier et deuxième éléments de coulissement (162, 162' ; 172, 172').

5. Nacelle selon la revendication 4, **caractérisée en ce que** le premier élément de coulissement (162, 162') comprend une pluralité de rouleaux (164) et le deuxième élément de coulissement (172, 172') comprend un canal longitudinal allongé (174) qui est configuré pour recevoir la pluralité de rouleaux (164).

6. Nacelle selon la revendication 4, **caractérisée en ce que** le premier élément de coulissement (262) comprend une pluralité de rouleaux (264) et un rebord longitudinal (265), et le deuxième élément de coulissement (272) comprend une surface de guidage longitudinale (273), sur laquelle la pluralité de rouleaux (264) sont configurés pour rouler dans une direction longitudinale, et un canal longitudinal allongé (275) qui est configuré pour recevoir le rebord longitudinal (265).

7. Nacelle selon l'une quelconque des revendications 2 à 6, **caractérisée en ce que** le mécanisme de levage (180) comprend un deuxième composant coulissable supplémentaire (170), qui comprend de préférence une paire supplémentaire desdits deuxièmes éléments de coulissement (172, 172') qui sont situés respectivement sous des bords longitudinaux opposés (184, 184') de l'ensemble de première et deuxième trappes (112a, 112b), la paire supplémentaire desdits deuxièmes éléments de coulissement (172, 172') pouvant être positionnée pour se mettre en prise avec la paire respective desdits premiers éléments de coulissement (162, 162') sur la première trappe (112a), dans laquelle le mécanisme de levage (180) comprend un premier dispositif d'entraînement (185) destiné à relever ou abaisser le deuxième élément coulissable (170) qui comprend de préférence la paire supplémentaire desdits deuxièmes éléments de coulissement (172, 172'), et un deuxième dispositif d'entraînement (186) destiné à déplacer, longitudinalement le long du toit (101), le deuxième composant coulissable (170) qui comprend de préférence la paire supplémentaire desdits deuxièmes éléments de coulissement (172, 172').

8. Nacelle selon la revendication 7, **caractérisée en ce que** le deuxième dispositif d'entraînement (186) comprend un portique allongé (188) qui s'étend longitudinalement le long de l'habitacle (105).

9. Nacelle selon la revendication 7 ou 8, **caractérisée en ce que** le mécanisme de levage (180) est configuré pour relever la paire supplémentaire desdits deuxièmes éléments de coulissement (172, 172') depuis une première position jusqu'à une deuxième position, dans laquelle, dans la première position, la première trappe (112a) est en position fermée et la paire desdits premiers éléments de coulissement (162, 162') sur la première trappe (112a) est en prise avec la paire supplémentaire desdits deuxièmes éléments de coulissement (172, 172'), et dans la deuxième position, la première trappe (112a) est en position relevée partiellement ouverte et la paire supplémentaire desdits deuxièmes éléments de coulissement (172, 172') est alignée sur la paire desdits deuxièmes éléments de coulissement (172, 172') sur la deuxième trappe (112b), moyennant quoi la paire desdits premiers éléments de coulissement (162, 162') sur la première trappe (112a) peut être amenée à coulisser longitudinalement de manière à ne plus être en prise avec la paire supplémentaire desdits deuxièmes éléments de coulissement (172, 172') et de manière à être en prise avec la paire desdits deuxièmes éléments de coulissement (172, 172') sur la deuxième trappe (112b) afin de former l'empilement (115) des première et deuxième trappes (112a, 112b).

10. Nacelle selon la revendication 9, **caractérisée en ce que** le mécanisme coulissant (150b) de la deuxième trappe (112b) comprend en outre un premier composant coulissable (160) qui comprend une paire desdits premiers éléments de coulissement (162, 162') de la deuxième trappe (112b) qui est configurée pour se mettre en prise dans une relation de coulissement avec la paire supplémentaire desdits deuxièmes éléments de coulissement (172, 172') du mécanisme de levage (180), éventuellement dans laquelle, lorsque la paire desdits premiers éléments de coulissement (162, 162') de la deuxième trappe (112b) est en prise de manière coulissante avec la paire supplémentaire desdits deuxièmes éléments de coulissement (172, 172') du mécanisme de levage (180), le deuxième dispositif d'entraînement (186) peut déplacer l'empilement (115) des première et deuxième trappes (112a, 112b) longitudinalement le long de l'habitacle (105).

11. Nacelle selon l'une quelconque des revendications précédentes, **caractérisée en ce que** le mécanisme de levage (180) est configuré pour soulever la deuxième trappe (112b) lorsque la première trappe (112a) est dans la configuration empilée au-dessus de la deuxième trappe (112b), depuis une position fermée dans laquelle la deuxième trappe (112b) est montée sur l'habitacle (105) et y ferme au moins partiellement une ouverture de toit (120), jusqu'à une position relevée partiellement ouverte dans laquelle la deuxième trappe (112b) est plus haute qu'une troisième trappe adjacente (112c) qui comprend un respectif mécanisme coulissant s'étendant longitudinalement (150c), moyennant quoi la troisième trappe (112c) peut coulisser dans la direction longitudinale, et dans laquelle le mécanisme coulissant (150b) de la deuxième trappe (112b) peut se mettre en prise de manière coulissante avec le mécanisme coulissant (150c) de la troisième trappe adjacente (112c), moyennant quoi, lorsque la deuxième trappe (112b) est en position relevée partiellement ouverte, la deuxième trappe (112b) peut coulisser jusqu'à une configuration empilée au-dessus de la troisième trappe adjacente (112c) afin de former un empilement (118) des première, deuxième et troisième trappes (112a, 112b, 112c).

12. Nacelle selon la revendication 11 lorsqu'elle dépend de la revendication 9 ou de toute autre revendication qui en dépend, **caractérisée en ce que** le mécanisme de levage (180) est configuré pour déplacer la paire supplémentaire desdits deuxièmes éléments de coulissement (172, 172') depuis la deuxième position jusqu'à une troisième position, dans laquelle, dans la troisième position, la deuxième trappe (112b) a la première trappe (112a) au-dessus dans une configuration empilée et la deuxième trappe (112b) est en position fermée et la paire desdits premiers éléments de coulissement (162, 162') sur la deuxième trappe (112b) est en prise avec la paire supplémentaire desdits deuxièmes éléments de coulissement (172, 172') du mécanisme de levage (180), éventuellement dans laquelle le mécanisme coulissant (150c) de la troisième trappe (112c) comprend un premier composant coulissable (160) qui comprend une paire respective desdits premiers éléments de coulissement (162, 162') et un deuxième composant coulissable (170) qui comprend une paire respective desdits deuxièmes éléments de coulissement (172, 172'), et le mécanisme de levage (180) est configuré pour déplacer la paire supplémentaire desdits deuxièmes éléments de coulissement (172, 172') depuis la troisième position jusqu'à une quatrième position, dans laquelle, dans la quatrième position, la deuxième trappe (112b) est en position relevée partiellement ouverte et la paire supplémentaire desdits deuxièmes éléments de coulissement (172, 172') est alignée sur la paire desdits deuxièmes éléments de coulissement (172, 172') sur la troisième trappe (112c), moyennant quoi la paire desdits premiers éléments de coulissement (162, 162') sur la deuxième trappe (112b) peut être amenée à coulisser longitudinalement de manière à ne plus être en prise avec la paire supplémentaire desdits deuxièmes éléments de coulissement (172, 172') et de manière à être en prise avec la paire desdits deuxièmes éléments de coulissement (172, 172') sur la troisième trappe (112c) afin de former l'empilement (118) des première, deuxième et troisième trappes (112a, 112b, 112c).

13. Nacelle selon la revendication 12, **caractérisée en ce que** le mécanisme de levage (180) est configuré pour déplacer la paire supplémentaire desdits deuxièmes éléments de coulissement (172, 172') depuis la quatrième position jusqu'à une cinquième position, dans laquelle, dans la cinquième position, les première, deuxième et troisième trappes (112a, 12b, 112c) forment l'empilement (118) de celles-ci, la troisième trappe (112c) est en position fermée et la paire desdits premiers éléments de coulissement(162, 162') sur la troisième trappe (112c) est en prise avec la paire supplémentaire desdits deuxièmes éléments de coulissement (172, 172') du mécanisme de levage (180), et dans laquelle le deuxième dispositif d'entraînement (186) peut déplacer l'empilement (118) des première, deuxième et troisième trappes (112a, 112b, 112c) longitudinalement le long de l'habitacle (105) à partir de la cinquième position.

14. Nacelle selon l'une quelconque des revendications précédentes, **caractérisée en ce que** le toit (101) comprend en outre un mécanisme de verrouillage (192) servant à verrouiller ensemble et de manière libérable des trappes adjacentes verticalement (112a, 112b, 112c) dans une configuration empilée.

15. Nacelle selon l'une quelconque des revendications précédentes, **caractérisée en ce que,** en position fermée, au moins l'une des première et deuxième trappes (112a, 112b ; 212a, 212b) est fixée de manière amovible à l'habitacle (105) par un ensemble boulon/écrou à filetage (143) comprenant un écrou (146) ayant un premier filetage hélicoïdal externe (154) qui est vissé par filetage dans une paroi (136) de la trappe, et un boulon (144) qui s'étend à travers une paroi (137) de l'habitacle (105) et la paroi (136) de la trappe et qui est vissé par filetage dans un deuxième filetage hélicoïdal interne (156) de l'écrou (146), éventuellement dans laquelle l'écrou (146) comprend une partie tête (147), une partie tige intégrée (148) adjacente à la partie tête (147), et un alésage borgne cylindrique (149) qui s'étend longitudinalement le long de la partie tige (148) et qui présente une extrémité ouverte (150) à une extrémité libre (151) de la partie tige (148) et une extrémité fermée (152) à l'intérieur de l'écrou (146), dans laquelle la partie tige (148) présente une surface externe de rotation (153) avec le premier filetage hélicoïdal (154) et l'alésage cylindrique borgne (149) présente une surface cylindrique interne (155) avec le deuxième filetage hélicoïdal (156), dans laquelle les premier et deuxième filetages hélicoïdaux (154, 156) ont des sens de rotation opposés, en outre éventuellement dans laquelle la surface externe de rotation (153) de la partie tige (148) est effilée de manière tronconique et a son rayon qui diminue en direction de l'extrémité libre (151).
